Europäisches Patentamt

**European Patent Office**

Office européen des brevets

(11) Publication number: **0 023 245**

**A1**

(12) **EUROPEAN PATENT APPLICATION**

(21) Application number: **80102561.0**

(22) Date of filing: **09.05.80**

(51) Int. Cl.³: **G 06 F 3/037**

(30) Priority: **27.07.79 GB 7926203**

(43) Date of publication of application:
**04.02.81 Bulletin 81/5**

(84) Designated Contracting States:
**CH DE FR GB IT LI NL SE**

(71) Applicant: **International Business Machines Corporation**

**Armonk, N.Y. 10504(US)**

(72) Inventor: **Warwick, William Arthur**
**'Flinders' 24 Downs Road**
**South Wonston Winchester Hampshire(GB)**

(74) Representative: **Appleton, John Edward**
**IBM United Kingdom Patent Operations Hursley Park**
**Winchester Hants, SO21 2JN(GB)**

(54) **Light pen.**

(57) A light pen for detecting radiation from a display screen has a tubular body with a conical tip (1). The tip which fastens into the pen body includes an opaque bush (4) which has a bore (5) having a precisely determined diameter for transmitting light from an aperture in the tip to a light sensing device mounted in the body of the pen. The bore or interior surface of the bush has a surface formed to eliminate internal reflection.

FIG. I

UK9-79-010                              1

## LIGHT PEN

This invention relates to light pens of the type that
are used in conjunction with interactive display devices.

Interactive display devices such as the IBM 3270 terminal system or the IBM 3250 Display System (IBM is a Registered Trade Mark) have two main methods for the user to communicate with the system.  The first is by means of a keyboard which is connected directly to the controlling
processor of the system, the second is a light pen with which
the user can indicate a particular piece of data on the
screen, or a part of the screen to which some processing
action is required to be taken.  Depending upon the type of
display used the controlling processor determines the information imparted by the position of the light pen by detecting
where the beam of a cathode ray tube, or similar device, is
when the light pen senses light at the display screen.

To this end light pens in the past have used optical
light collecting devices which have a restricted angle of
view.  These optical light collecting devices direct light
onto a light sensing device, such as a photodetector which
changes the received light pulses into electrical signals.

Examples of the optical light collecting devices used in
previous light pens are found in the following publications.

IBM Technical Disclosure Bulletin (TDB) Vol. 12, No. 6,
November 1969, p 800.  'Optical Funnel for Light Pen' by
R G Gray.

IBM TDB Vol 13, No. 2, July 1970, p 502.  'Computer Light Pen' by J C Greeson Jr.

IBM TDB Vol. 15, No. 5, October 1972, p 1474.  'Fibre Optic Probe Actuate Switch' by R B Johnson.

The above publication show the use of pens with optical systems comprisng respectively a light pipe (Gray), a lens system (Greeson) and a fibre optic bundle (Johnson).  The most common device in present use is that used with the IBM 3278 display unit.  This pen uses a conical light pipe having a convex lens formed on the base of the cone.

It has been found, however, that as the density of information displayed on a screen increases, and as the speed of the scan of the beams of cathode ray tubes increase, the accuracy, with which the processor determines the position of the light pen on the face of a screen, drops.  It has become difficult to develop an optical system which has a sufficient narrow angle of view so that it excludes light from adjacent points on a screen without the system becoming very costly and cumbersome to use.

One of the main difficulties encountered in using optical systems in light pens is achieving similar light collecting characteristics for a batch of light pens to be used on a single display system.  A single display controller controls many display units each with its own light pen. Because the characteristic between pens can vary greatly the processor has to perform complicated routines to compensate which makes the system very inefficient.

UK9-79-010                          3

According to the present invention there is provided a
light pen for detecting radiation from a display screen comprising a tubular body having a conical tip that has, an
aperture for receiving light, means to transmit light from
the aperture to a light sensing device mounted in the body,
said light sensing device including means to convert light
signals to electrical signals, characterised in that the
means to transmit light from the aperture in the tip to the
light sensing device is a bush of an opaque or opaquely
coloured material having a hole along its centre axis and
having an internal surface formed such as to eliminate internal reflection.

In one embodiment of the invention the bush is in the
form of a cylinder with a centre bore which has a tapped
screw thread substantially along its entire length.

In a further embodiment of the invention the bush is in
the form of a hollow cone moulded such that the internal surface is serrated to prevent internal reflection.

A preferred material for the bush is a black plastic or
nylon, although other opaque or coated substances can be
used.

In order that the invention may be fully understood it
will now be described with reference to the accompanying
drawings, in which:

Figure 1 shows an enlarged cross section of the tip of a
light pen embodying the present invention;

UK9-79-010                           4

Figure 2 shows a cross section of an alternative bush
for use in a light pen embodying the present invention.

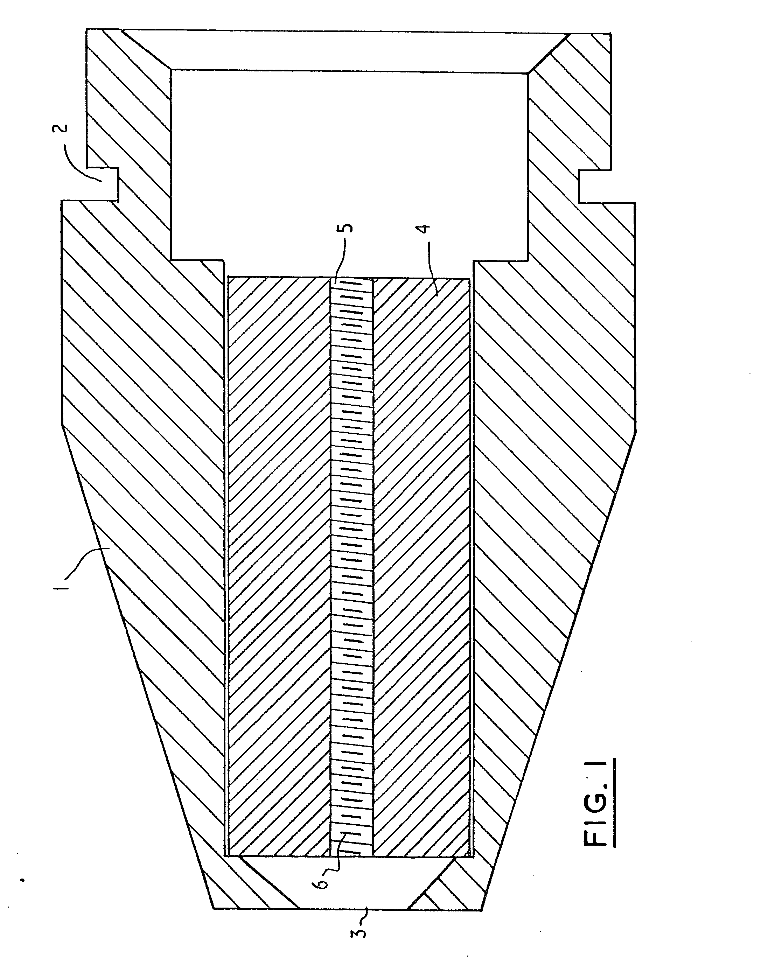

Referring now more particularly to Figure 1 there is
shown the tip of the body of a light pen.  The main tubular
body of the light pen is not shown, as its construction does
not form any part of the present invention it is usually constructed of brushed aluminium.  The component parts of the
pen include a light sensing device mounted in the body of the
pen and connected to an amplifier which amplifys the electrical signals received from the light sensing device.  Cable
connections from the amplifer are taken from the end of the
tubular body and connected to the controlling processor of
the interactive display system.

The tip of the body comprises a portion 1 which may be
an extension of the main body of the pen or a separate piece
that clips or screws into the body by a fastening device
shown schematically at 2.  The portion 1 may be constructed
of a black plastic material.  The tip has an aperture 3 which
in the preferred embodiment is 2.5 mm in diameter.  The
inside of the tip is formed to receive a black nylon bush 4
which in the present embodiment is 15 mm in length with a
diameter of 5 mm.  The bush 4 has a bore 5 drilled along its
centre axis having a diameter of 1.9 mm.  The bore 5 is
tapped with a screw thread shown schematically at 6.  It has
been found that it is preferable to have the thread 6 extending the full length of the bush 4 as this then ensures
only light that enters the aperture 3 and bore 5 parallel to
the axis of the pen reaches the sensing device.

The advantage achieved by using a non-optical system as
shown in Figure 1 is that the brushes 4 can be manufactured to have a consistent bore diameter. This means that pens using such devices will show more consistent characteristics in light collection than can be achieved with purely optical systems. The bush is also cheap to manufacture compared with an optical lens system.

Optical systems described in the prior art above provide a certain amount of gain to the light detected at their tips. This feature is not found in the present invention and to compensate a higher gain electrical amplifier can be used in the connection with the light sensing device.

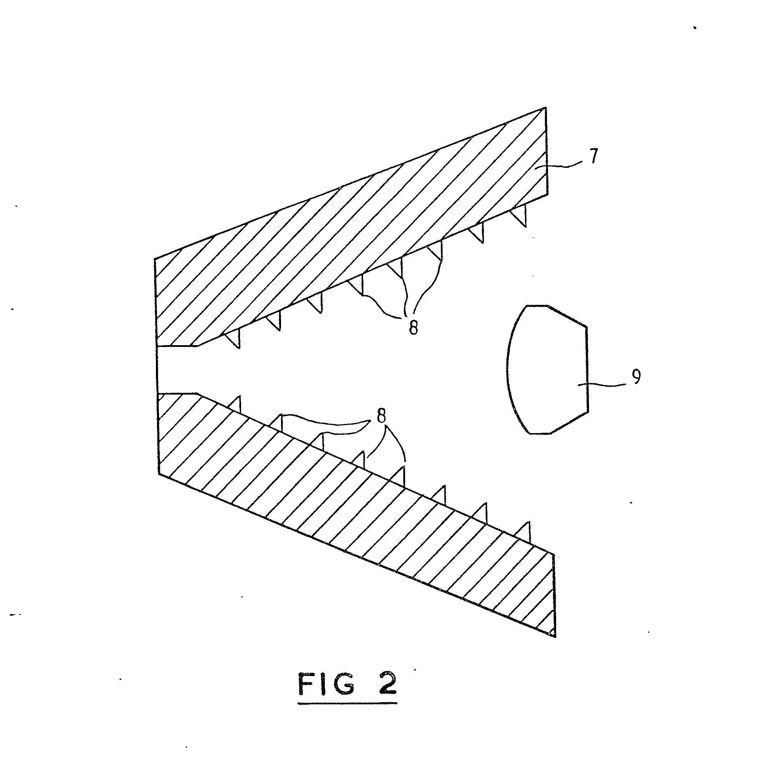

Figure 2 shows an alternative form of bush moulded in the shape of a hollow cone 7 having a series of serrations 8 which elimate internal reflection. A sensing device 9 is shown schematically mounted at the base of the cone.

0023245

UK9-79-010                              1

WHAT WE CLAIM IS:

1.   A light pen for detecting radiation from a display
screen comprising a tubular body having a conical tip (1)
that has an aperture (3) to receive light at one end, means
(4) to transmit light from the aperture to a light sensing
device mounted in the body, said light sensing device
including means to convert light signals to electrical
signals, characterised in that the means (4) to transmit
light from the aperture in the tip to the light sensing
device is a bush of an opaque or opaquely coloured material
having a hole along its centre axis and having an internal
surface formed such as to eliminate internal reflection.

2.   A light pen as claimed in claim 1 in which said bush (4)
is a cylinder having a screw thread tapped along
substantially the entire length of the hole.

3.   A light pen as claimed in claim 1 in which the bush is a
hollow cone (7) having its interior surface formed with a
series of serrations (8).

4.   A light pen as claimed in any one of claims 1, 2 or 3 in
which the bush (4, 7) is formed of a black plastic or nylon
material.

FIG. 1

FIG 2

**European Patent Office**

**EUROPEAN SEARCH REPORT**

Application number

EP 80 10 2561

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - A - 2 413 488 (SIEMENS) <br> * Page 5, lines 1-5; page 14; claim 17; figure 1 * <br><br> -- <br><br> ELEKTRONIK, vol. 1, 1975, Munich, DE, G. GIDL: "Digitale-Positionierung auf dem Bildschirm", pages 61-67 <br> * Page 63 "Lichtgreiffel" * <br><br> -- | 1 <br><br><br><br> 1 | G 06 F 3/037 |
| A | US - A - 3 586 861 (R.E. WERNIKOFF) <br> * Column 1, lines 50-60 * <br><br> -- | 1 | **TECHNICAL FIELDS SEARCHED (Int. Cl.³)** <br><br> G 06 F 3/037 |
| D | IBM TECHNICAL DISCLOSURE BULLETIN, vol. 12, no. 6, November 1969, New York, US, R.G. GRAY: "Optical funnel for light pen", page 800 <br> * The whole document * <br><br> -- | 1 | |
| D | IBM TECHNICAL DISCLOSURE BULLETIN, vol. 13, no. 2, July 1970, New York, US, J.C. GREESON: "Computer light pen" page 502 <br> * The whole document * <br><br> -- | 1 | **CATEGORY OF CITED DOCUMENTS** <br><br> X: particularly relevant <br> A: technological background <br> O: non-written disclosure <br> P: intermediate document <br> T: theory or principle underlying the invention |
| D | IBM TECHNICAL DISCLOSURE BULLETIN, vol. 15, no. 5, October 1972, New York, US, R.B. JOHNSON: "Fiberoptic probe actuate switch", page 1474 ./. | 1 | E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 30-10-1980 | LACROIX |

EPO Form 1503.1 06.78

| Category | Citation of document with indication, where appropriate, of relevant passages | Relevant to claim |
|---|---|---|
| | * The whole doucment * | |
| | -- | |
| | US - A - 1 546 264 (W. STORY) | 1 |
| | * Column 1, lines 9-18; column 3, lines 2-29 * | |
| | ---- | |

**DOCUMENTS CONSIDERED TO BE RELEVANT**

CLASSIFICATION OF THE APPLICATION (Int. Cl. 3)

TECHNICAL FIELDS SEARCHED (Int. Cl. 3)